# EUROPEAN PATENT SPECIFICATION

(11) **EP 1 097 409 B1**
(45) Date of publication and mention of the grant of the patent: **11.05.2005**
(21) Application number: 99930949.5
(22) Date of filing: 16.07.1999
(51) Int. Cl.: G05B 15/00, G05B 19/418, G08C 19/00

(54) **INTERNET UTILITY INTERCONNECT METHOD**
VERBINDUNGSVERFAHREN FÜR INTERNERTDIENSTE
PROCEDE D'INTERCONNEXION POUR SERVICES INTERNET

(30) Priority: 16.07.1998 AU PP471098
(43) Date of publication of application: 09.05.2001
(73) Proprietor: Ehome Corporation PTY Limited, Maylands, S.A. 5067 (AU)
(72) Inventor: NGO, Get, Sen, Norwood, S.A. 5067 (AU); PARSONS, Ewan, Stepney, S.A. 5067 (AU)
(74) Representative: Mertens, Hans Victor
(86) International application number: PCT/AU1999/000576
(87) International publication number: WO 2000/004427

(56) References cited:
- EP-A- 0 822 473
- EP-A- 0 825 506
- EP-A- 0 838 768
- WO-A-96/18982
- WO-A-96/36953
- AU-A- 3 611 797

## Description

### FIELD OF THE INVENTION

The present invention relates to an interconnection method for a system for remote control of at least one apparatus providing a virtual link interconnecting on-line database records to automation apparatus.

### BACKGROUND OF THE INVENTION

It is well known to control or access a variety of apparatus in a home or a commercial environment through an electronic network, whether that be through existing telecommunication lines, by radio control or through electrical supply lines. One of the more common uses is to access various utilities, such as electrical or gas meters, or security apparatus. To achieve this, it is necessary to have an intelligent controlling means in the home or commercial environment that can be externally accessed to allow for immediate control or access to various apparatus. EP-A-0 838 768 relates to a web interfacing device which discloses an arrangement which utilizes a web browser interface to control devices distributed across a wide area network. In the device a web server is to be embedded. The difficulty with this is that to ensure one can effectively have access into the home or commercial environment, a dedicated connection into the home or commercial environment is necessary. The infrastructure necessary as well as the expense of a dedicated communication line is prohibitive to most users and utilities.

### SUMMARY OF THE INVENTION

It is an object of the present invention to overcome at least some of the abovementioned problems or to provide the public with a useful alternative. This is achieved by the features of claim 1. Preferred embodiments are disclosed in the subclaims.

### BRIEF DESCRIPTION OF THE DRAWINGS

To assist in understanding the invention reference is made to the following figures in which;
Figure 1 is a flow chart of the method of the present invention;

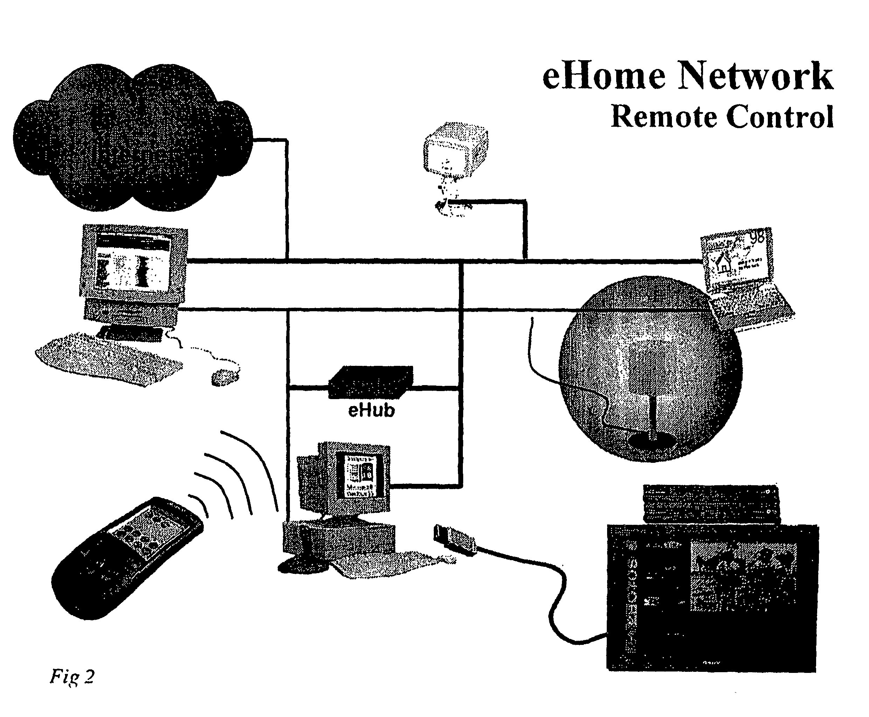

Figure 2 is a schematic diagram of a network employing the invention;

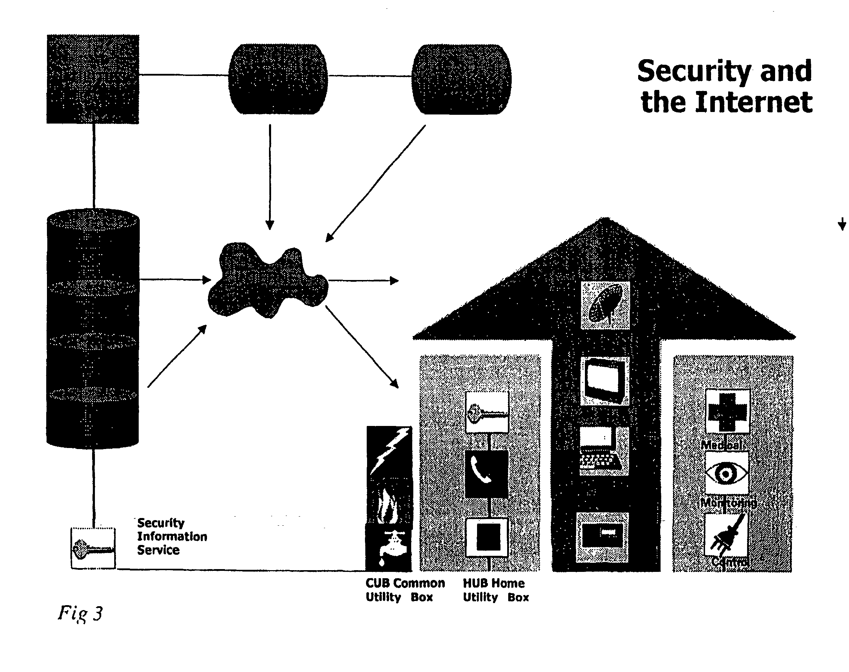

Figure 3 is a schematic diagram of the invention in connrnction with security arrangements;

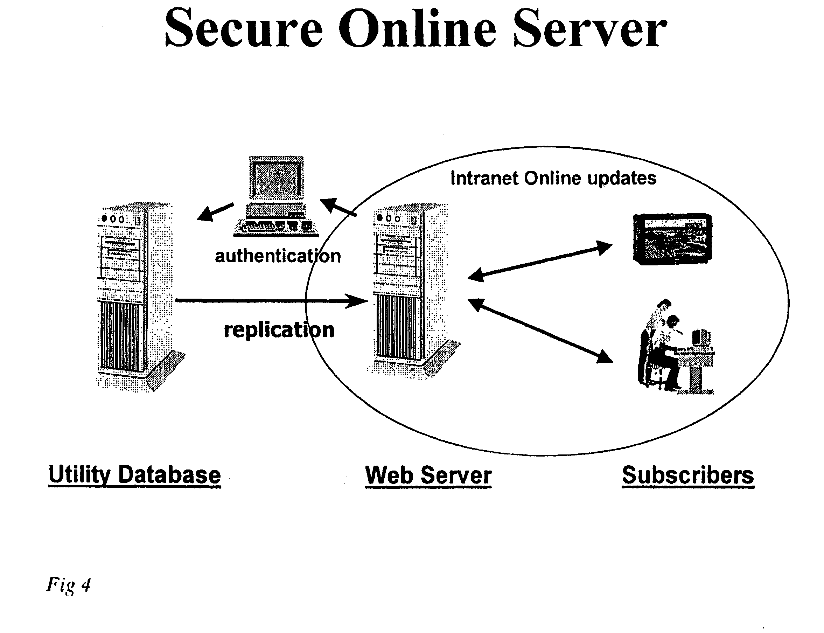

Figure 4 is a schematic diagram showing the broad concept of the invention when used by utilities;
Figure 5 is a typical on-screen display that may be used by a home owner;
Figure 6 is a typical on-screen display in relation to an environment control center; and
Figure 7 is a typical on-screen display in relation to a security control centre.

### BEST MODES OF CARRYING OUT THE INVENTION

To further assist in understanding the invention reference is made to the following descriptions which should be read in conjunction with the accompanying drawings.

### Intranet protocol

The invention relates to a method and an apparatus employing that method wherein a master webserver is connected to remote slave nodes using an appropriate method (hereinafter also referred to as protocol) for control and automation over networks of different media including wire, radio, microwave and powerlines.

The arrangement that acts like a virtual Internet link (VIL) which therefore responds to requests from the server and remotes to replicate information as though the remote node is connected to the Internet. The virtual link can be used for remote information reading as well as home automation and security reflected in the master server. Remote nodes can act on the Internet database information through a master/slave/exception protocol supporting automation, metering, security, electronic cash transfers and Internet URL (Universal Resource Location) requests.

In one embodiment of the invention a master/slave polling message establishes an event which is used to schedule any waiting exception message to be transmitted. The system features a master and slave architecture for initiating reception of secure Internet messages from any node. Each node may be polled systematically, by the server, which then replicates the data between the related database record and the slave node. As a result of this arrangement the data transmission protocol establishes a virtual link to the Internet for remote metering, information, automation, security, control and electronic commerce in the home or business. In addition the protocol allows messages to be forwarded to Internet service providers via the server to be able to surf the internet via the eLink connection.

The invention allows, for example, the energy consumption from a mains electrical power supply to be measured at the remote node and a deduction of appropriate payments for subscribers according to authorised preprogrammed rates. A virtual Internet link allows for bi-directional secure electronic payments so that the attached smartcard and e-cash devices can debit or credit approved payments. The automatic remote metering and control protocol is defined for communication between remote nodes and an on-line database web server (eg. Utility Gateway) which may communicate through data collection units supporting protocol conversion. A World Wide Web browser can monitor and control devices in homes and businesses via the utility server and slave nodes using the virtual link enabled by this described method and protocol.

### Combined Transfer Media Functionality

In a further embodiment of this invention there is proposed a method for operating a remote control and monitoring system that replicates data between a host computer located at a central server site and a set of automation nodes located at a remote site. The replicating protocol provides a virtual link between the said remote site to said central website, and includes;
- means to monitor said data such as utility meter readings, security, finance and Internet requests; and
- means to link the data collected for subsequent access via the Internet

The system can communicate with a central server over existing wire and wireless communication systems, such as local telephone, cellular phone, radio, powerlines, landline, leased line, dial-up modem links and cable interfaces. The protocol may operate in a half-duplex mode over single transmission pair.

### Local Electronic Billing and Payment

A further advantage of the system is that once information is known, the system may provide a gateway to advanced consumer services at the remote location including prepayment systems. For example the system could be used for an energy billing system for charging the energy usage of a metered device in accordance with a downloaded authorised rate schedule from a webserver. Each predefined rate schedule can define different times periods and amounts of payment deductions directly from an e-cash The schedule of rates and periods form part of the VIL protocol which also supports the transmission of the metered utility consumption.

### Back-Channel Web Browsing

A further advantage of the invention is that it can act as a service agent for fulfilling requests of a web browser client coupled to a local PC, Digital or Web TV set-top interface. This method of transmission of simplex Internet requests, mainly URL addresses is unique through exception messaging in combination with master/stave polling of automation and/or metering information to the server. The one way simplex operation provides a back-channel capability for utility providers to deliver interactive services for their subscribers. Security, local government and on-line information providers are regarded as utilities in addition to the traditional providers of water, gas, electricity and telephone services. Under this scheme each home has a equivalent IP address on the system and the remote node can send a request within the protocol.

With this back-channel capability URL's are sent from the home to broadcast Internet providers supporting web browsing from TV cable and satellite downfeeds. A feature of the protocol is the reversal of the high integrity polled data which has low priority in response time combined with the low integrity Internet requests which gets the highest priority for speed of transmission. In this way the protocol can connect homes to the Internet through URL requests from set top boxes to their broadcast TV service provider. The utility server can act as a half duplex server that is specifically designed to pass Internet requests to broadcast systems. With very little additional overhead to automated metering a utility provider can forward subscriber Internet data requests to a broadcast service provider who can transmit Internet data to a browser running on a PC or TV with an Internet address.

### Internet Control

The invention also provides a method of controlling devices attached to remote nodes provided through the Internet by the virtual linking of data records in the master web server. Under this arrangement each remote, node has a virtual Internet address which is replicated from the server database. The web server can have the capability to be changed by authorised users though the Internet using a range of available commercial technologies. The database fields in the records (including security and air-conditioning controls) are dynamically linked to the remote nodes (automation interface node) by the VIL Protocol using a master/slave polling method with error checking to ensure integrity. This enables residents and other subscribers to turn on a range of connected devices in the home or work premises using the Internet.

### Replication through sub-networks

Data concentrators may be of a type that use the same communication protocols as the remote nodes. This provides a means to route messages to a destination node through a second network and still maintain the virtual link between the server and the remote node, Data Concentrators are routers used to speed up communications in systems with many slaves. Each Data Concentrator replicates communication to a group of slaves through one communication port and acts as a large slave through the second port. The software then replicates the second port as if it were a large slave with increased speed.

The Data Concentrator or Replicator can act as a Protocol Converter and communicate with the server using a higher speed communication channel using a variety of protocols yet maintaining the overall virtual Internet Link protocol between master server and slave node. The Data Concentrators can communicate with the slave devices using dial-up telephone, leased line, microwave, radio or satellite interfaces. Additional wide area or local area network interfaces can be used. A store and forward feature allows any Data Concentrator to relay a message to another when direct re-transmission is not possible. The data concentrator can be used to pass on or relay the message in both directions.

### Exception Messaging

In another embodiment the present invention provides for a method to support exception message transmission from the slave node when a request is initiated. When such a request is detected the slave unit initiates a transmission to the Master unit and transfers that data. Timing is used to avoid potential collisions using the stave address to do this. Before any unit transmits it must first detect if any other unit is transmitting. This is achieved by detecting the break in the polled transmission and if another exception transmission is detected it delays until the end of the next polled transmission before it tries again. When multiple slaves require transmission at the same time an avalanche effect can result causing erratic system operation and sometime system failure. To cope with this a fall back process is used so that if after all possible attempts send the message caused by the exceptions have failed, each slave stops trying to transmit and waits until polled by the master.

The present invention thus relates to a method for a virtual link, hereinafter referred to as eLink interconnecting online database records to automation apparatus using a different type of message protocol with embedded URL's referenced to international standard addresses for home and business devices. The new protocol allows for utility load shedding over the Internet where the utilities may include water, gas, electricity, telecommunications, security and the Internet.

In, a preferred embodiment there is provided a method for a virtual link interconnecting online database records to automation apparatus using a different type of message protocol with embedded URL's referenced to international standard database addresses for home and business devices eLink protocol allows for utility load shedding over the Internet. Utilities include water, gas, electricity, telecommunications, security and Internet. eLink establishes a virtual link to the Internet for metering, intomnation, automation, security, control and electronic commerce in the home or business. In addition Internet request messages can be forwarded to internet service providers via eLink. eLink collects data from the special purpose eHub automation interface in the home. This is based on embedded internet protocols IP associated with each microprocessor automation interface (eHub).

At the other end, eLink is able to connect with a secure Web Server database. The database uses IP extended addressing to map each device in the home into internet address space and is used to collect utility data from remote meters, as well as hold the status of each device for remote access over the internet.

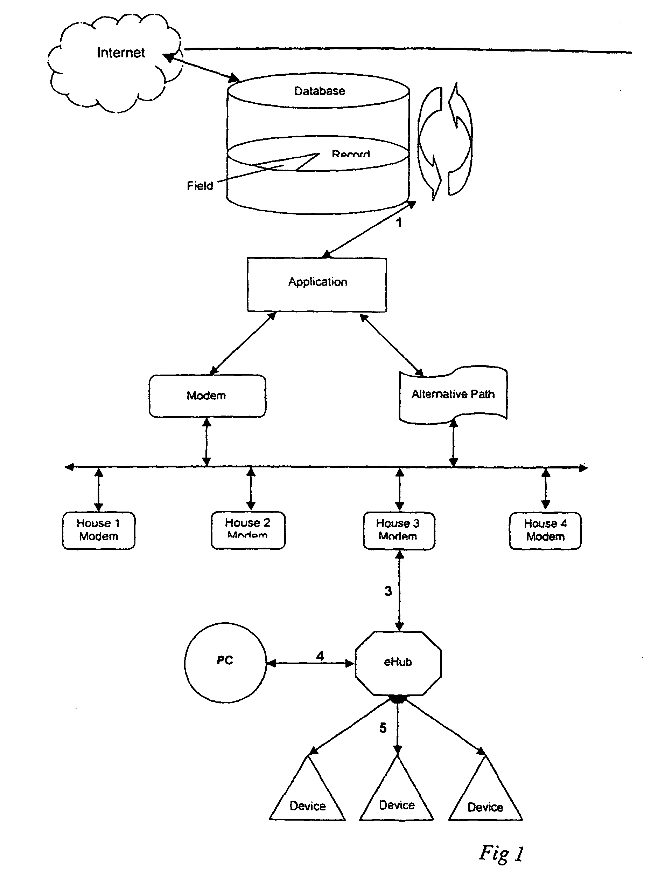

Each home owner is represented by encrypted records in the data base, and access to relevant fields is available to each participating utility. This is illustrated in Figure 1 where the desired home appliances or utilities are mirrored on an external server. eLink provides each home owner with access to their specific meter reading data that has been collected in the data base. eLink can also provide each utility with access to its specific data in the data base. eLink thus provides the basis for both home owners and utilities to share and monitor utility resource usage.

Home owners can also perform other home based transactions and access the Internet using eLink. Transactions may be initiated from the home or any other location with an Internet connection. In particular, the home owner can initiate requests for data to be sent via cable or satellite to the TV in the home. This allows for datacasting and multicasting requests to be serviced over the utility infrastructure.

It may be noted that in the home, eHub works with all a range of home management and remote devices including C-Bus, X10, CE-Bus, I-wire and other protocols which may be multiplexed through eHome wiring network in the home. eLink assists utilities to develop systems for automatic meter reading and load shedding leading using the internet. This leads to prompt payment or prepayment systems based on ecommerce from the webserver databases.

eLink is a virtual link replicating online database records to the eHub automation interface in the home. eLink is used for remote information reading as well as home automation and security replicated in the webserver. The media independent eLink network connection with the home, exchanges URL information supporting automation, metering, security, ecommerce transfers and Internet backchannel requests.

eLink is designed to work with a range of home management systems and devices. eLink will support with industry standards such as CEBus and Universal Plug and Play through cross matching- standard addresses into the eLink URL message structure.

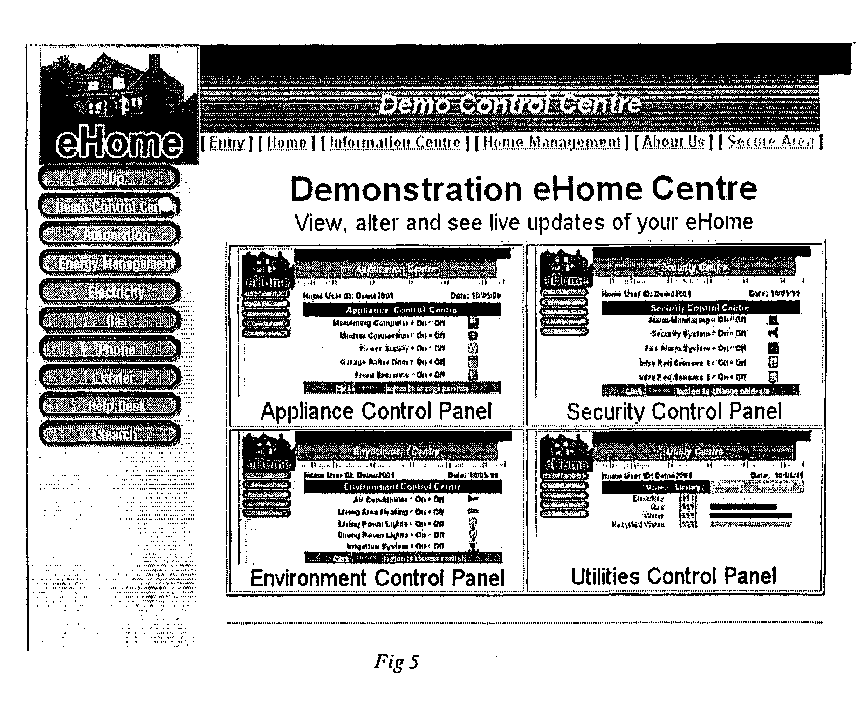

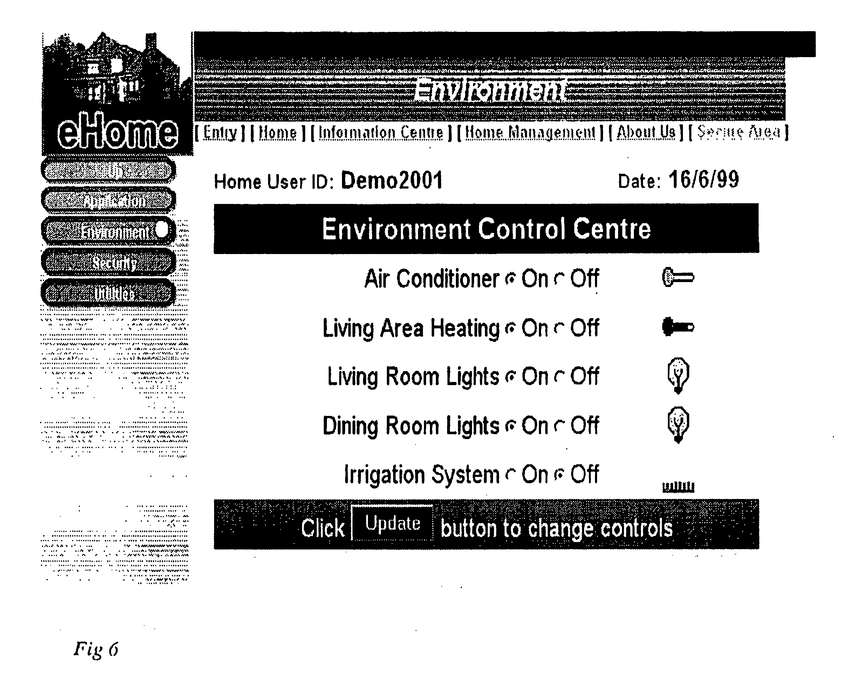

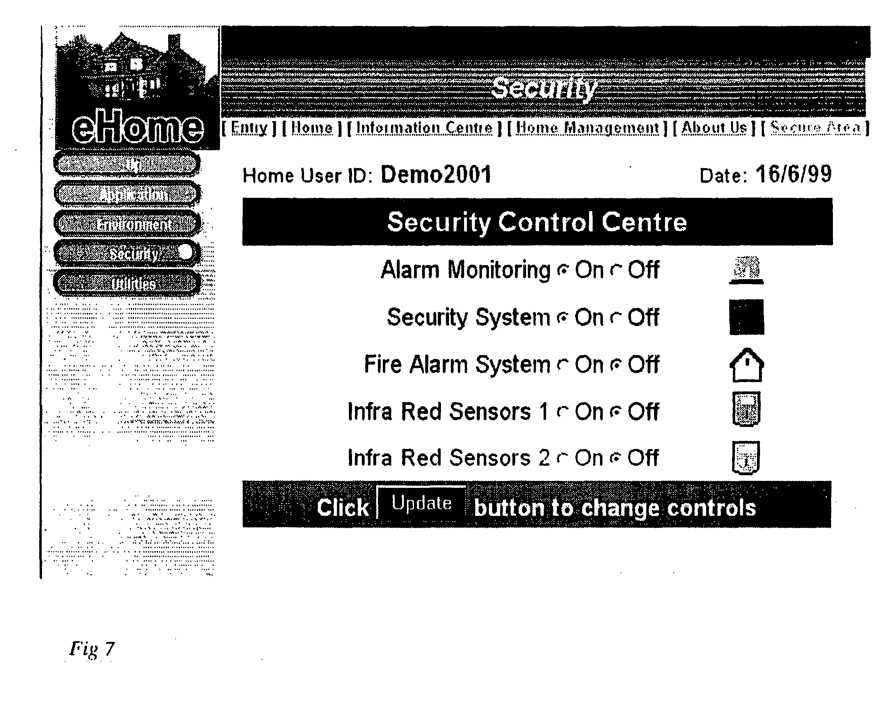

The automatic remote metering and control protocol provides communication between the eHub and an online database web server (eg. Utility Gateway). This enables the home owner to monitor and control devices in home via a web browser either in the home or remotely through the Internet, examples of this shown in Figure 5 where a home owner may access any one of a number of control panels such as appliance, security, environment or utilities. Once a particular panel is chosen, such as the environment in Figure 6 and security in Figure 7 the home owner can change control different systems. Thus, the home owner can turn the air conditioner on, and next time that the server updates the eHub the actual command is executed in the home.

In the future this allows each home to have a equivalent IP address without a PC in the home as it resides on the Utility Gateway server. The remote eHub node can send a request within the protocol. With this backchannel capability, URL's can be sent from the home to broadcast Internet providers supporting web browsing from TV via cable and satellite broadcast services. This feature can connect homes to the Internet through URL requests from eHome's to their broadcast TV service provider. The utility server can act as a half duplex server that is specifically designed to pass Internet requests to these broadcast providers. By using very little additional overhead to automated metering, a utility provider can forward subscriber Internet data requests to a broadcast service provider who can transmit Internet data to a browser running on a PC or TV with an Internet address.

Remote control is provided through the Internet by the linking of data records in the gateway Web Server. Under this arrangement each remote node has a virtual Internet address which is replicated from the server database. The home record in the server has the capability to be changed by authorised users though the Internet using ecommerce security methods (eg name & password or digital signature). The database fields in the records (including security and air-conditioning controls) are dynamical linked to the automation interface to enable residents and valid subscribers to turn on a range of connected devices in the home using the Internet.

The eHub control panel, designed for the home, will provide a convergent point of access to phone, water, gas, electricity, Internet and security services.

The eHome system may handle totaling counts from electricity, water and gas meters with pulsed or digital outputs including protection against tampering with the inputs. Interface to existing home automation systems is achieved through digital I/O and serial ports which allow for optional connection to a PC including providing a shared modem facility in the home.

The master/slave polling message establishes an event which is used to schedule any waiting exception message to be transmitted after a programmable time delay. The eLink system features a master and slave architecture for initiating reception of secure Internet requests messages from any node. Each node may is be polled systematically, on a virtually continuous or periodic basis, by the server, which then replicates the data between the related database record and the addressed slave node. As a result of this arrangement the data transmission protocol establishes a virtual link to the Internet for remote metering, information, automation, security, control and electronic commerce in the home or business. In addition the protocol allows messages to be forwarded to Internet service providers via the server to be able to surf the internet via the eLink connection.

The energy consumption measured at the remote node may deduct e-cash payments for subscribers according to authorised pre-programmed rates. The virtual Internet link allows for bi-directional secure electronic payments so that the attached smartcard and e-cash devices can remove debit or provide credit approved payments. The automatic remote metering and control protocol is defined for communication between remote nodes (eg. eHub) and a online database web server (eg. Utility Gateway) which communicate through data collection units supporting protocol conversion. A World Wide Web browser can monitor and control devices in homes and businesses via the utility server and slave nodes using the virtual link enabled by the this defined described method and protocol.

A Utility Gateway Server, includes a computer which is connected to the Internet and the remote nodes through a data concentrator multiplexer unit for generation of commands and the receipt of data over communication lines. The commands generated by the server contain an address portion and a command message portion.

There is an eHub automation interface node located at each customer residence. Each automation interface node is capable of selectively communicating with a plurality of utility meters and attached devices, for selectively driving a plurality of devices at a customer residence, for monitoring the status of a plurality of external contacts, and for selectively providing a plurality of alarms and messages to the customer. Each node includes a receiver for receiving commands from the server over a plurality of communication lines as well as a transmitter for transmitting return messages to the server over the same communication line. In order to increase the through-put capability, the protocol allows priority to requests for internet addresses over commands for meter reading and security transfers.

The present invention thus provides a remote automatic meter reading, control and security system as a background activity. It may further provide an automatic utility payment system, with encrypted security, for payment of the measured reading of a consumed commodity using a range of electronic commerce methods accepted by the consumer and the utility. Yet further it may provide a remote automatic meter reading, control and customer alert system incorporating controls for improving the energy management of utility services by customer usage and exception reporting, as well as assuring that loads which have been authorised to be turned off by the system will once again be turned on.

Still further still the invention may provide a master/slave command and message interfaced with customer event requests whereby the data throughput for Internet requests is enhanced. Yet further still the present invention may provide a meter reading, control and security system incorporating polled message formats in order to provide high integrity of customer billing information, security system operation and electronic funds transfer to the server database.

eLink is a unique IP based protocol for home automation using powerlines, telephone wire and radiowireless media. Under this scheme each home has an IP address on a server database with utility fields (including security and air-conditioning controls) dynamically linked to the home embedded controller (eHub automation interface node) using a master/slave polling with Internet IP embedded protocol. IP addresses can be sent from the home for supporting Internet web browsing.

This eLink protocol would run on a range of hardware including the eHub in the home where it can connect to lighting, environment and entertainment networks. e-cash controls can be transferred in both directions and the protocol is suitable for industrial telemetry applications.

The Home Management System includes utility billing and control via the internet.

Each home has a equivalent TCP/IP address like a street address and crossed referenced to the telephone number. The protocol includes security and authorised access to standards accepted for electronic commerce. The eLink protocol is an efficient communications scheme to provide a virtual link to connect a record in the server database to a number of services in the home.

Embedded controller technology in the automation interface provides an in-home local-area network (LAN) that can control home appliances and services that implement multiple protocols in addition to the virtual link to the Utility gateway server. Each household can use a set-top box or PC as a terminal for interfacing the automation interface with major home appliances and consumers. eLink allows telemetry to function over radio, powerlines landline, leased line, dial-up modem links and cable interfaces such as RS232, RS422, RS485. Via extemal converters it is also possible to link units via fibre optic.

eLink can be used for SCADA (Supervisory control and data acquisition) systems where SCADA refers to the combination of the fields of telemetry and data acquisition encompassing the collection of the information, transferring it back to a central site. carrying out any necessary analysis and control and then displaying this data on a number of operator screens.

The server as master makes regular, repeated requests for data to each slave (eHub) in sequence, writing the data to each unit and reading that unit's data back in response. This is a half duplex protocol where the slave only responds to a request from the master. Each slave unit has a unique address or identification number based on IP sub-addressees to allow this to function correctly. If the slave does not respond within a defined time, the master will retry again (up to a configurable number of retries) and then carries on polling the other units in the system. It is possible to retry that unit again on several more re-transmissions before marking it as failed link after which the master Will only poll it once each poll period to enable a restored link to be detected.

To overcome some of the following disadvantages in polled systems eLink can use sub-master networks so that there are several small, fast messages which can be received by the server master in between polled messages.
- Normally the interrupt type requests from a slave requesting urgent action cannot be handled within master/slave protocols.
- Systems which are lightly loaded with minimum data changes from a slave are quite inefficient and unnecessarily slow

eLink supports Report By Exception as the slave station monitors its own inputs for a request for Internet data. When such a request is detected the slave unit initiates a transmission to the Master unit and transfers that data. Timing is used to avoid potential collisions using the slave IP sub address to do this. Before any unit transmits it must first detect if any other unit is transmitting. This can be done by detecting the break in the polled transmission and another exception transmission is detected transmission a delay is required until the end of the next polled transmission before it tries again. When multiple staves require transmission at the same time an avalanche effect can result causing erratic system operation and sometime system failure. To cope with this a fall back process is used so that if after all possible attempts send the message caused by the exceptions have failed, each slave stops trying to transmit and waits until polled by the master.
The advantages of this are:
- It reduces the unnecessary transfer of data at any particular time as in polled systems.
- URL requests are detected quickly.

Internet addresses are assigned to slave nodes on the Internet server which is the master for the network. Each host gateway server must have its own Internet address and support sub-addresses for each stave node. A database is normally used for Address Resolution and storage of information exchanged with each slave. It should also translate Internet addresses to Ethernet addresses when needed with LANS and WANS.

eLink protocol runs over a variety of network media: IEEE 802.3 (ethernet) and 802.5 (token ring) LAN's, X.25 lines, satellite links, and serial lines. There are standard encapsulations for eLink packets defined for many of these networks. Serial Line eLink, is used for master/slave serial connections using wire and wireless media.

eLink defines a sequence of characters that frame data packets on a serial line. It provides addressing, packet type identification, error detection/correction and compression mechanisms.

eLink is used for automation applications. It supports URL requests to connect homes to the Internet through a secure webserver. The utility server can act as a half duplex server that is specifically designed to pass Internet requests to broadcast systems. With very little additional overhead an utility server can forward customer data requests to a broadcast service provider who can transmit Internet data to a browser running on a PC or TV with an Internet address.

### eLink Wire Cable

Peripheral monitoring devices such as movement detectors have traditionally been connected to a host by means of four core cable. The advent of low cost cameras and the image handling capability of eHome means that video surveillance will increasingly be used. eUnk uses eight core Category 5 cable via RJ45 plugs and sockets to connect peripheral devices to eHub remote nodes.

To allow manufacturers of peripheral devices to ensure their products are compatible with eHome and directly connectable to eHub nodes the following wiring printout is defined using any colours in the designated order by the following table:

| **Wire colour** | ***Function*** | ***Cat5 pin*** |
|---|---|---|
| White/green | Video / AC | 1 |
| Green | Video /AC | 2 |
| White/orange | +12V | 3 |
| Blue | +5V | 4 |
| White/blue | eLink | 5 |
| Orange | Ground | 6 |
| White/brown | Signal / eLink Back Channel | 7 |
| Brown | Tamper / eLink Back Channel | 8 |

Thus, the present invention also provides a master wiring key configuration for multiple use of Category cable as defined by the eLink wire printout definition which is combined with unique numbers for each device on pin 3.

### Embedded URL Address

eLink uses an embedded IP protocol with 128-bit addressing, allowing for an expanded addressing scheme involving sub-addressing. eLink uses the 128-bit address as follows:

### No of bytes Description

- 0-3: Standard IP Address
- 4-7: Customer ID, 10-digti phone number in binary, for example
- 8-11: Bit - cross-referenced to tables for Contact ID, CEBus Number, X10 Address, Status, enabling and command
- 12-15: Operator - set as a value, giving and on/off status and values eg temperature readings, and meter readings.

The 128-bit address structure of eHome comprises a main address and three sub-addresses. Each address has specific significance to a Web browser:

A virtual link is created from the database to the device. eLink devices could be any or all of the following:
- Security Camera
- Air conditioner, heating unit, lights, and other connected devices
- Utility Meters for Electricity, Gas, Water and Recycled Water
- Energy Management Control

The database itself is stored on a secure web server, and accessed through a website. The application (1) running continuously scans the database, checking for any updates, modifications, new or deleted entries, etc.

When a client wished to access their home though the website, a message (2) is sent from the application to the modem connected to the web server. The message can be in the form of:
- A Secure eLink Message via E-mail
- A Dial-up Connection via modem using TCP/IP
- Direct internet Connection using TCP/IP (ie. not through E-mail)
- Or Another Form such as radio and powerlines

Each house that has eHome installed uses a modem, which is connected through the Security System. The message is received by this modem, which sends it over the CEBus, or other transmission media to devices connected to the eHub.

It eHub is also connected to a computer, this receives the message and initiates corresponding actions to devices in the home. The message contains information to petform functions or gather information for these devices in the home. These include:
- Security Camera Pictures
- Turning on/off devices
- Reading Utility Meters
- Energy Control reading and change of mode setting

### Internet protocol V6

The present invention is particularly useful when the new Internet Protocol, Version 6 (IPv6) will become the standard. IPv6 is designed to be a simple, forward-compatible upgrade to the existing version of IP. This upgrade is also intended to resolve all of the weaknesses that IPv4 is currently manifesting, including the shortage of available IP addresses, the inability to accommodate time-sensitive traffic, and its lack of network layer security.
The next generation of IP, commonly known as IPng but more correctly identified as IPv6, offers a vastly expanded addressing scheme to support the continued expansion of the Internet, and an improved ability to aggregate routes on a large scale.

IPv6 also supports numerous other features, such as reat-time audio or video transmissions, host mobility, end-to-end security through network layer encryption and authentication, as well as auto-configuration and auto-reconfiguration. It is expected that these services will provide ample incentive for migration as soon as IPv6-capable products become available. Many of these features still require additional standardization. Therefore, it would be premature to expound upon them at any great length.

The one aspect of IPv6 that can, and should, be expounded upon is its addressing. IPv4's 32-bit address length gave the protocol a theoretical capability to address 2 to the 32^{nd} power, or about 4 billion devices. Inefficient subnet masking techniques, among other wasteful practices, has squandered this resource.
IPv6 uses a 128-bit address and is theoretically capable of 2 to the 96^{th} power times the size of the IPv4 address space. This equals 340,282,366,920,938,463,463,374,607,431,768,211,456 mathematically possible addresses. Only about 15 percent of this potential address space is currently allocated. The remainder is reserved for future use and includes the capacity for eLink messages by direct IP mapping of devices in the home.

## Claims

1. Interconnection method for a system for remote control of at least one apparatus; said system including:
a first control means adapted to communicate with said apparatus;
a second control means adapted to communicate with said first control means;
said first control means further adapted to communicate with said second control means;
said second control means including a memory storing information about the status of said electrical apparatus and including an input means enabling said status to be altered;
wherein when said status has been altered the second control means communicates said new status to said first control means which subsequently checks the status of said apparatus and alters it if necessary to be the same as the new communicated status and wherein when the status of said electrical apparatus has been altered the new status is communicated to the first control means and to the second control means, said second control means altering the memory to reflect the status of the apparatus; said input means comprising a web-addressable link whereby a user can access said memory via the Internet;
the method further comprising the method step of:
assigning a Web address to said at least one apparatus whereby said at least one apparatus is web-addressable independent.of the nature of the communications link between said first control means and said second control means.

2. Method according to claim 1, wherein said Web address is assigned via said second control means as a virtual address.

3. Method according to claim 1 or 2, wherein said web-addressable link permits transmission of at least portions of data contained in said memory to a communication device connected to the Internet.

4. Method according to claim 1, wherein said web-addressable link permits a user to change at least portions of said data contained in said memory by means of said communication device.

5. Method according to claim 3, wherein said communication device is a personal computer.

6. Method according to claim 3, wherein said communication device is a personal digital assistant.

7. Method according to claim 3, wherein said communication device communicates with said memory by means of a wireless link.

8. Method according to claim 7, wherein said wireless link is a mobile telephone or cellular telephone link.

9. Method according to claim 1 or 2, wherein said apparatus is a utility meter.

10. Method according to claim 9, wherein said meter is further accessible by a utility authority through said second control means.

11. Method according to claim 10, wherein said utility authority can control said utility meter.

12. Method according to any of the preceding claims, wherein said second control means communicates with said first control means via the Internet.

13. Method according to claim 1 or 2, wherein said second control means communicates with said first control means via an electrical power distribution means.

14. Method according to any of the preceding claims, wherein said second control means receives regular status updates from said first control means.

15. Method according to claim 14, wherein said updates occur at regular pre-determined temporal intervals.

16. Method according to claim 14, wherein said updates occur continuously.

17. Method according to any of the preceding claims, wherein said status includes information such as control information, management information and service information of said apparatus.

18. Method according to any of the preceding claims, wherein said first control means is a microprocessor.

19. Method according to any of the preceding claims, wherein said second control means is a computer server.

20. Method according to claim 17, wherein said information is presented as a home page on a server.

## Patentansprüche

1. Verbindungsverfahren für ein System zur Fernsteuerung wenigstens einer Vorrichtung, wobei das System enthält:
eine erste Steuereinrichtung, die so eingerichtet ist, dass sie mit der Vorrichtung kommuniziert;
eine zweite Steuereinrichtung, die so eingerichtet ist, dass sie mit der ersten Steuereinrichtung kommuniziert;
wobei die erste Steuereinrichtung des Weiteren so eingerichtet ist, dass sie mit der zweiten Steuereinrichtung kommuniziert;
die zweite Steuereinrichtung einen Speicher enthält, der Informationen über den Status der elektrischen Vorrichtung speichert, und eine Eingabeeinrichtung enthält, die es ermöglicht, den Status zu ändern;
wobei, wenn der Status geändert worden ist, die zweite Steuereinrichtung der ersten Steuereinrichtung den neuen Status mitteilt, die anschließend den Status der Vorrichtung prüft und ihn, wenn erforderlich, so ändert, dass er der gleiche ist wie der neu mitgeteilte Status, und wobei, wenn der Status der elektrischen Vorrichtung geändert worden ist, der neue Status der ersten Steuereinrichtung und der zweiten Steuereinrichtung mitgeteilt wird, die zweite Steuereinrichtung den Speicher ändert, so dass er den Status der Vorrichtung widerspiegelt, und die Eingabeeinrichtung einen web-adressierbaren Link umfasst, so dass ein Benutzer über das Internet auf den Speicher zugreifen kann;
wobei das Verfahren des Weiteren den folgenden Verfahrensschritt umfasst:
Zuweisen einer Webadresse zu der wenigstens einen Vorrichtung, so dass die wenigstens eine Vorrichtung unabhängig von der Art der Kommunikationsverbindung zwischen der ersten Steuereinrichtung und der zweiten Steuereinrichtung web-adressierbar ist.

2. Verfahren nach Anspruch 1, wobei die Webadresse über die zweite Steuereinrichtung als eine virtuelle Adresse zugewiesen wird.

3. Verfahren nach Anspruch 1 oder 2, wobei der web-adressierbare Link Übertragung wenigstens von Teilen von Daten, die in dem Speicher enthalten sind, zu einer Kommunikationseinrichtung ermöglicht, die mit dem Internet verbunden ist.

4. Verfahren nach Anspruch 1, wobei der web-adressierbare Link es einem Benutzer ermöglicht, wenigstens Teile von Daten, die in dem Speicher enthalten sind, mittels der Kommunikationseinrichtung zu ändern.

5. Verfahren nach Anspruch 3, wobei die Kommunikationseinrichtung ein Personalcomputer ist.

6. Verfahren nach Anspruch 3, wobei die Kommunikationseinrichtung ein PDA ist.

7. Verfahren nach Anspruch 3, wobei die Kommunikationseinrichtung mit dem Speicher über eine Drahtlosverbindung kommuniziert.

8. Verfahren nach Anspruch 7, wobei die Drahtlosverbindung eine Mobiltelefon- oder eine Zellulartelefonverbindung ist.

9. Verfahren nach Anspruch 1 oder 2, wobei die Vorrichtung ein Verbrauchszähler ist.

10. Verfahren nach Anspruch 9, wobei des Weiteren von einer Versorgungsbehörde über die zweite Steuereinrichtung auf den Zähler zugegriffen werden kann.

11. Verfahren nach Anspruch 10, wobei die Versorgungsbehörde den Verbrauchszähler steuern kann.

12. Verfahren nach einem der vorangehenden Ansprüche, wobei die zweite Steuereinrichtung mit der ersten Steuereinrichtung über das Internet kommuniziert.

13. Verfahren nach Anspruch 1 oder 2, wobei die zweite Steuereinrichtung über eine Elektroenergie-Verteilungseinrichtung mit der ersten Steuereinrichtung kommuniziert.

14. Verfahren nach einem der vorangehenden Ansprüche, wobei die zweite Steuereinrichtung regelmäßige Status-Aktualisierungen von der ersten Steuereinrichtung empfängt.

15. Verfahren nach Anspruch 14, wobei die Aktualisierungen in regelmäßigen vorgegebenen Zeitintervallen stattfinden.

16. Verfahren nach Anspruch 14, wobei die Aktuatisierungen kontinuierlich stattfinden.

17. Verfahren nach einem der vorangehenden Ansprüche, wobei der Status Informationen, wie beispielsweise Steuer-Informationen, Verwaltungs-Informationen und Service-Informationen, der Vorrichtung enthält.

18. Verfahren nach einem der vorangehenden Ansprüche, wobei die erste Steuereinrichtung ein Mikroprozessor ist.

19. Verfahren nach einem der vorangehenden Ansprüche, wobei die zweite Steuereinrichtung ein Computer-Server ist.

20. Verfahren nach Anspruch 17, wobei die Informationen als eine Homepage auf einem Server dargestellt werden.

## Revendications

1. Procédé d'interconnexion pour un système pour une commande à distance d'au moins un appareil ; ledit système comprenant :
un premier moyen de commande adapté pour communiquer avec ledit appareil ;
un deuxième moyen de commande adapté pour communiquer avec ledit premier moyen de commande ;
ledit premier moyen de commande est en outre adapté pour communiquer avec ledit deuxième moyen de commande ;
ledit deuxième moyen de commande comprenant une mémoire de stockage d'information sur l'état dudit appareil électrique et comprenant un moyen d'entrée permettant de modifier ledit audit état ;
dans lequel lorsque ledit état a été modifié le deuxième moyen de commande communique ledit nouvel état audit premier moyen de commande lequel vérifie ensuite l'état dudit appareil et le modifie si cela est nécessaire afin d'être le même que le nouvel état communiqué et dans lequel lorsque l'état dudit appareil électrique a été modifié le nouvel état est communiqué au premier moyen de commande et au deuxième moyen de commande, ledit deuxième moyen de commande modifiant la mémoire pour refléter l'état de l'appareil ; ledit moyen d'entrée comprenant un lien adressable par le web par lequel un utilisateur peut accéder à ladite mémoire via l'Internet ;
le procédé comprenant en outre l'étape de procédé consistant à :
affecter une adresse web audit au moins un appareil par laquelle ledit au moins un appareil est adressable par le web indépendamment de la nature du lien de communication entre ledit premier moyen de commande et ledit deuxième moyen de commande.

2. Procédé selon la revendication 1, dans lequel ladite adresse web est affectée via ledit deuxième moyen de commande comme une adresse virtuelle.

3. Procédé selon l'une des revendications 1 ou 2, dans lequel ledit lien adressable par le web rend possible la transmission d'au moins des parties de données contenues dans ladite mémoire vers un dispositif de communication connecté à l'Internet.

4. Procédé selon la revendication 1, dans lequel ledit lien adressable par le web rend possible le changement, par un utilisateur, d'au moins des parties desdites données contenues dans ladite mémoire au moyen dudit dispositif de communication.

5. Procédé selon la revendication 3. dans lequel ledit dispositif de communication est un ordinateur personnel.

6. Procédé selon la revendication 3, dans lequel ledit dispositif de communication est un assistant numérique personnel.

7. Procédé selon la revendication 3, dans lequel ledit dispositif de communication communique avec ladite mémoire au moyen d'une liaison sans fil.

8. Procédé selon la revendication 7, dans lequel ladite liaison sans fil est une liaison par téléphone mobile ou une liaison par téléphone cellulaire.

9. Procédé selon l'une des revendications 1 ou 2, dans lequel ledit appareil est un appareil de mesure de service.

10. Procédé selon la revendication 9, dans lequel ledit appareil de mesure est en outre accessible par une autorité de service à travers ledit deuxième moyen de commande.

11. Procédé selon la revendication 10, dans lequel ladite autorité de service peut commander ledit appareil de mesure de service.

12. Procédé selon l'une des revendications précédentes, dans lequel ledit deuxième moyen de commande communique avec ledit premier moyen de commande via l'Internet.

13. Procédé selon l'une des revendications 1 ou 2, dans lequel ledit deuxième moyen de commande communique avec ledit premier moyen de commande via un moyen de répartition de puissance électrique.

14. Procédé selon l'une des revendications précédentes, dans lequel ledit deuxième moyen de commande reçoit des mises à jour régulières d'état dudit premier moyen de commande.

15. Procédé selon la revendication 14, dans lequel lesdites mises à jour sont produites à intervalles de temps prédéterminés réguliers.

16. Procédé selon la revendication 14, dans lequel lesdites mises à jour sont produites en continu.

17. Procédé selon l'une des revendications précédentes, dans lequel ledit état comprend des informations telles que des informations de commande, des informations de gestion et des informations de mise à jour dudit appareil.

18. Procédé selon l'une des revendications précédentes, dans lequel ledit premier moyen de commande est un microprocesseur.

19. Procédé selon l'une des revendications précédentes, dans lequel ledit deuxième moyen de commande est un ordinateur serveur.

20. Procédé selon la revendication 17, dans lequel ladite information est présentée comme une page d'accueil sur un serveur.
